# EUROPÄISCHE PATENTANMELDUNG

(11) **EP 3 031 636 A1**
(43) Veröffentlichungstag der Anmeldung: **15.06.2016**
(21) Anmeldenummer: 15192232.5
(22) Anmeldetag: 30.10.2015
(51) Int. Cl.: B60G 3/06, B60G 11/48, B60G 13/02, B62D 7/18, F16F 1/366, B60B 5/02

(54) **RADTRÄGERMODUL**

(30) Priorität: 03.12.2014 DE 102014224685
(71) Anmelder: ZF Friedrichshafen AG, 88046 Friedrichshafen (DE)
(72) Erfinder: Segler, Daniel, 88048 Friedrichshafen (DE); Heidsieck, Knut, 32257 Buende (DE); Bäumer, Benjamin, 49477 Ibbenbüren (DE); Knaub, Witalij, 49504 Lotte (DE); Kontermann, Peter, 49090 Osnabrück (DE); Hacker, Clemens, 49080 Osnabrück (DE); Wachtel, Martin, 50735 Köln (DE); Meyer, Wolfgang, 49424 Goldenstedt (DE)

(57) **Zusammenfassung**

Ein Radträgermodul (8) für eine Achsanordnung (1) eines Fahrzeugs ist als ein einstückiges Bauelement aus Endlosfaser-Kunststoff ausgeformt. Das Radträgermodul (8) weist eine füllbare Aussparung auf, deren Mantelfläche von dem Radträgermodul (8) umschlossen ist. Das Radträgermodul (8) ist flächensymmetrisch zu einer längsgerichteten Symmetrieebene (17) und weist in einem Querschnitt entlang dieser Symmetrieebene (17) eine nahezu tangensförmige Mittellinie (18) auf.

## Beschreibung

Die vorliegende Erfindung betrifft ein Radträgermodul für eine Achsanordnung eines Fahrzeugs mit den oberbegrifflichen Merkmalen nach Anspruch 1.

Achsanordnungen für Fahrzeuge weisen eine Vielzahl an Bauelementen auf, um verschiedene Funktionen abzudecken, wie beispielsweise Stabilisierung, Lenkung, Federung, Dämpfung und Radführung. Die benötigten Bauelemente für die Achsanordnung sind in ihrer Position innerhalb der Achsanordnung meist nicht variabel. Die Federungen, die im Fahrbetrieb beispielsweise Unebenheiten der Fahrbahn abfedern, sind häufig als separates Federelement ausgeführt. Auch die Dämpfer sind meist separate Bauelemente. Im Fahrzeugleichtbau ist es jedoch notwendig, die Gesamtanzahl der Bauelemente und das Gewicht der einzelnen Bauelemente zu reduzieren.

Aus der DE 102007053120 A1 ist ein Radträger für ein Fahrzeug bekannt, der aus einem Faserverbundwerkstoff ausgeformt ist. Der Radträger weist mehrere Lasteinleitungselemente auf, beispielsweise für einen Radlagersitz, für Lenkeranbindungselemente, oder Federbeinaufnahmen, und kann ein Schwenklager oder ein Achsschenkel sein. Der Profilquerschnitt des Radträgers ist hierbei hohl und entweder offen oder geschlossen ausgestaltet.

Der vorliegenden Erfindung liegt die Aufgabe zu Grunde, ein verbessertes Radträgermodul für eine Achsanordnung eines Fahrzeugs der eingangs genannten Art vorzuschlagen. Hierbei soll das Radträgermodul sowohl eine Dämpfung als auch eine Federung sowie eine teilweise Radführung einer Achsanordnung übernehmen. Das Radträgermodul soll derart ausgestaltet sein, dass es auf Grund der Formgebung und der Materialauswahl die genannten Funktionen aufweist. Der Radträgermodul soll ein geringeres Gesamtgewicht aufweisen als herkömmliche Radträgermodule.

Die vorliegende Erfindung schlägt ausgehend von der vorgenannten Aufgabe ein Radträgermodul für eine Achsanordnung eines Fahrzeugs mit den Merkmalen nach Patentanspruch 1 vor. Weitere vorteilhafte Ausgestaltungen und Weiterbildungen gehen aus den Unteransprüchen hervor.

Ein Radträgermodul für eine Achsanordnung eines Fahrzeugs ist als ein einstückiges Bauelement aus Endlosfaser-Kunststoff ausgeformt. Ein einstückiges Bauelement kann zerstörungsfrei nicht mehr weiter in Einzelteile zerlegt werden und besteht somit aus einem einzelnen Bauteil. Der Endlosfaser-Kunststoff ist vorzugsweise ein glasfaserverstärkter Kunststoffverbund (GFK). Alternativ dazu kann ein kohlenstofffaserverstärkter Kunststoffverbund (CFK) oder ein anderer Endlosfaser-Kunststoffverbund genutzt werden. Der Kunststoffverbund ist dabei derart gewählt, dass die Bauelementelastizität den Ansprüchen an Festigkeit, Stabilität und Federung genügt. Durch den Einsatz des Endlosfaser-Kunststoffs weist das Radträgermodul ein geringeres Gewicht auf als ein handelsübliches Radträgermodul aus einer Metalllegierung.

Das Radträgermodul weist eine füllbare Aussparung auf, deren Mantelfläche von dem Radträgermodul umschlossen ist. Die Aussparung erstreckt sich vorzugsweise durch das gesamte Radträgermodul. Hierbei ist die Mantelfläche der Aussparung von dem Radträgermodul umschlossen. Dies heißt, die Aussparung ist vorzugsweise ein Zugkörper, welcher frei von dem Material des Radträgermoduls ist. Ein Zugkörper ist hierbei definiert als ein Volumenkörper, dessen Grund- und Deckfläche die gleiche Form aufweisen, wobei die Grund- und Deckfläche mittels einer auf diesen beiden Flächen vorzugsweise senkrecht stehenden Mantelfläche verbunden sind. Die Grund- und die Deckfläche der Aussparung des Radträgermoduls sind beispielsweise nahezu nierenförmig ausgestaltet, können aber alternativ dazu eine andere geeignete Form aufweisen.

Die Aussparung des Radträgermoduls erstreckt sich von einer Seitenfläche des Radträgermoduls zu einer anderen Seitenfläche des Radträgermoduls und ist somit durchgängig. Eine Seitenfläche des Radträgermoduls ist definiert als diejenige Fläche, die parallel zu einer Drehachse der Räder eines Fahrzeugs, das das Radträgermodul aufweist, ist und die quer zu einer Ebene ist, die sich durch die kreisförmige Grundfläche eines Rades des Fahrzeugs aufspannt. Die Seitenflächen des Radträgermoduls sind, wenn das Radträgermodul im Fahrzeug verbaut ist, in Richtung der Fahrzeugfront und des Fahrzeughecks orientiert. Die Aussparung ist vorzugsweise vollständig oberhalb einer Radmitte positioniert. Die Aussparung ist füllbar ausgestaltet. Dies heißt, die Aussparung kann mit einem Material, welches sich von dem Material unterscheidet aus welchem das Radträgermodul ausgeformt ist, gefüllt werden.

Das Radträgermodul ist flächensymmetrisch zu einer längsgerichteten Symmetrieebene. Diese Symmetrieebene verläuft durch die Radmitte, wobei die Drehachse der Räder des Fahrzeugs vollständig in der Symmetrieebene liegt. Längsgerichtet bezieht sich hierbei auf die Längserstreckung des Radträgermoduls, d. h. die Erstreckung des Radträgermoduls in Richtung der Fahrzeugkarosserie. Das Radträgermodul hat in einem Querschnitt entlang dieser Symmetrieebene eine nahezu tangensförmige Mittellinie. Der Querschnitt wird in anderen Worten entlang der Symmetrieebene ausgeführt. Die Mittellinie ist hierbei definiert als diejenige Linie, die sich bei einer Querschnittsfläche des Radträgermoduls ergibt, wenn eine Linie, die zu jedem Punkt auf einer Berandung der Querschnittsfläche den gleichen Abstand aufweist, gezogen wird. Diese Mittellinie ist nahezu tangensförmig, wobei sich die Form auf die Tangensdarstellung in einem Koordinatensystem mit einer Abszisse und einer Ordinate bezieht, beispielswiese in dem Intervall von -90° bis + 90°. Das Radträgermodul weist somit eine gebogene Form mit einem deutlichen Schwung in der Mittellinie auf, die im Verlauf einer Tangensfunktion ähnelt. Durch die einstückige Ausformung aus Endlosfaser-Kunststoff, die gebogene Formgebung und die Aussparung im Radträgermodul weist das Radträgermodul eine Federungsfunktion auf. Somit entfällt beim Einbau des Radträgermoduls in eine Achsanordnung das herkömmliche Federungssystem.

Nach einer ersten Ausführungsform ist die füllbare Aussparung mit einem dämpfenden Material gefüllt. Das dämpfende Material ist hierbei beispielsweise ein Elastomer oder ein gel-artiges Material. Es sind aber auch andere Materialien, die eine dämpfende Wirkung haben, möglich. Durch das vollständige Füllen der Aussparung mit dem dämpfenden Material übernimmt das Radträgermodul die Funktion eines Dämpfers. Somit entfällt beim Einbau des Radträgermoduls in eine Achsanordnung das herkömmliche Dämpfungssystem.

Nach einer weiteren Ausführungsform weist das Radträgermodul ein Federbein auf, welches einen für hohe Biegemomente ausgelegten Lagerbereich aufweist. Das Federbein ist hierbei nicht als übliches Federbein zu verstehen, sondern das Federbein schließt das Radträgermodul in Richtung einer Karosserie des Fahrzeugs ab, d. h. das Federbein bildet einen Teilbereich des Radträgermoduls. Das Federbein kann über seinen Lagerbereich mit der Karosserie des Fahrzeugs verbunden werden. Hierbei ist der Lagerbereich derart dimensioniert, dass er hohe Biegemomente abstützen kann. Unter hohen Biegemomenten ist zu verstehen, dass sowohl Seitenführungskräfte als auch Längsführungskräfte nicht wie üblich über einen Lenker nahe einer Fahrbahn an einer Fahrzeugkarosserie abgestützt werden, sondern dass diese Kräfte über diesen Lagerbereich des Radträgermoduls als Moment eingebracht werden.

Nach einer weiteren Ausführungsform weist das Radträgermodul eine erste Verbindungsstelle für ein Lenksystem einer Achsanordnung auf. Diese erste Verbindungsstelle kann an einer beliebigen, für die Positionierung und Verbindung des Lenksystems geeigneten Stelle auf der Oberfläche des Radträgermoduls erfolgen. Beispielsweise kann die erste Verbindungsstelle oberhalb der Radmitte nahe dem Lagerbereich des Federbeins angeordnet werden. Die erste Verbindungsstelle kann auch auf einer der Fahrzeugkarosserie abgewandten Seite unterhalb der Radmitte angeordnet werden. Das Lenksystem kann in einer vollständigen Achsanordnung, in welcher das Radträgermodul verwendet wird, mit dem Radträgermodul an der ersten Verbindungsstelle verbunden werden.

Nach einer weiteren Ausführungsform weist das Radträgermodul eine zweite Verbindungsstelle für einen Lenker einer Achsanordnung auf. Diese zweite Verbindungsstelle ist vorzugsweise unterhalb der Radmitte auf der Symmetrieebene des Radträgermoduls an einem der Fahrzeugkarosserie abgewandten Ende des Radträgermoduls angeordnet. Dieses Ende des Radträgermoduls ist derjenige Bereich auf der Oberfläche des Radträgermoduls, der den größten Abstand zu dem Federbein aufweist. Alternativ dazu kann die zweite Verbindungsstelle an einer beliebigen, für die Positionierung und Verbindung des Lenkers geeigneten Stelle auf der Oberfläche des Radträgermoduls erfolgen. Der Lenker kann in einer vollständigen Achsanordnung, in welcher das Radträgermodul verwendet wird, mit dem Radträgermodul an der zweiten Verbindungsstelle verbunden werden.

Nach einer weiteren Ausführungsform weist das Radträgermodul eine Aussparung an einem mit einem Rad des Fahrzeugs verbindbaren Radträgermodulabschnitt auf, durch welche ein Antriebswellenabschnitt der Achsanordnung hindurch führbar ist. Die Aussparung für den Antriebswellenabschnitt ist durchgängig und frei von Material. Der Antriebswellenabschnitt kann bei der Verwendung des Radträgermoduls in einer Achsanordnung eines Fahrzeugs durch diese Aussparung hindurch geführt werden, um mit dem Rad der Achsanordnung verbunden zu werden, wobei das Rad mit dem Radträgermodul an dem Radträgermodulabschnitt lösbar verbunden ist. Die Größe und Ausgestaltung der Aussparung für den Antriebswellenabschnitt in dem Radträgermodul wird hierbei derart gewählt, dass das Radträgermodul bezüglich der Kräfte, die auf Grund der Radführung auf dieses übertragen werden, und bezüglich der zu leistenden Federung und Dämpfung stabil ist. Die Aussparung für den Antriebswellenabschnitt ist hierbei vertikal zu der Drehachse der Räder angeordnet, wobei der Mittelpunkt dieser Aussparung auf der Drehachse der Räder des Fahrzeugs liegt. Beispielsweise ist die Aussparung für den Antriebswellenabschnitt symmetrisch um die Drehachse der Räder herum kreisförmig ausgeformt.

Nach einer weiteren Ausführungsform weist das Radträgermodul eine dritte Verbindungsstelle für einen Stabilisator einer Achsanordnung auf. Die dritte Verbindungsstelle ist beispielsweise oberhalb der Radmitte an einer der Seitenflächen des Radträgermoduls angeordnet, wobei die dritte Verbindungsstelle nicht auf dem dämpfenden Material innerhalb der Aussparung angeordnet werden kann. Alternativ dazu kann die dritte Verbindungsstelle an einer beliebigen, für die Positionierung und Verbindung des Stabilisators geeigneten Stelle auf der Oberfläche des Radträgermoduls erfolgen. Der Stabilisator kann in einer vollständigen Achsanordnung, in welcher das Radträgermodul verwendet wird, mit dem Radträgermodul an der dritten Verbindungsstelle verbunden werden.

Eine Achsanordnung für ein Fahrzeug umfasst ein Lenksystem, zwei Antriebswellenabschnitte, zwei Lenker, einen Stabilisator, zwei Räder, einen Rahmen und zwei Radträgermodule nach wenigstens einer der beschriebenen Ausführungsformen. Jedes Radträgermodul ist mit dem Lenksystem über die erste Verbindungsstelle, mit dem Lenker über die zweite Verbindungsstelle und mit dem Stabilisator über die dritte Verbindungsstelle verbunden. Der Rahmen ist mit dem Stabilisator und mit den Lenkern verbunden.

Das Lenksystem ist hierbei handelsüblich ausgeführt. Wird das Lenksystem derart angeordnet, dass es mit dem Rahmen verbunden werden kann, wird die Vormontage der Achsanordnung erleichtert gegenüber einer Anordnung an einer anderen Position innerhalb der Achsanordnung. Die Lenker sind beispielsweise handelsübliche 2-Punkt-Querlenker oder handelsübliche 3-Punkt-Querlenker zur Versteifung der Radführung der Achsanordnung. Die Lenker sind hierbei angepasst an eine Übertragung von Längs- und Querkräften, die bei der Fahrzeugbewegung auftreten, ausgestaltet. Der Stabilisator zur Wankstabilisierung ist ein handelsüblicher Stabilisator. Falls das Radträgermodul ohne ein dämpfendes Material innerhalb der füllbaren Aussparung ausgestaltet ist, sind noch zwei Dämpfer für die Achsanordnung notwendig. Diese beiden Dämpfer können an einer beliebigen, für die Positionierung der Dämpfer geeigneten Stelle innerhalb der Achsanordnung angeordnet werden und sind als handelsübliche Dämpfer ausgeführt. Jeder Antriebswellenabschnitt ist mit einem Rad verbunden. Ein einzelner Antriebswellenabschnitt wird hierzu durch die die Aussparung für den Antriebswellenabschnitt eines einzelnen Radträgermoduls hindurch geführt. Die Antriebswellenabschnitte können hierbei eine Rotationsbewegung auf die Räder übertragen. Beispielsweise ist die Achsanordnung hierbei eine Frontachsanordnung.

Eine Achsanordnung für ein Fahrzeug umfasst ein Lenksystem, zwei Antriebswellenabschnitte, zwei Lenker, zwei Räder, einen Stabilisator und zwei Radträgermodule nach wenigstens einer der beschriebenen Ausführungsformen. Jedes Radträgermodul ist mit dem Lenksystem über die erste Verbindungsstelle, mit dem Lenker über die zweite Verbindungsstelle und mit dem Stabilisator über die dritte Verbindungsstelle verbunden. Die Lenker sind hierbei mit der Karosserie des Fahrzeugs verbindbar.

Das Lenksystem ist hierbei handelsüblich ausgeführt. Die Lenker sind beispielsweise handelsübliche 2-Punkt-Querlenker oder handelsübliche 3-Punkt-Querlenker zur Versteifung der Radführung der Achsanordnung und weisen Verbindungsstellen auf, damit diese mit der Fahrzeugskarosserie verbunden werden können. Die Lenker sind hierbei angepasst an eine Übertragung von Längs- und Querkräften, die bei der Fahrzeugbewegung auftreten, ausgestaltet. Der Stabilisator zur Wankstabilisierung ist ein handelsüblicher Stabilisator. Falls das Radträgermodul ohne ein dämpfendes Material innerhalb der füllbaren Aussparung ausgestaltet ist, sind noch zwei Dämpfer für die Achsanordnung notwendig. Diese beiden Dämpfer können an einer beliebigen, für die Positionierung der Dämpfer geeigneten Stelle innerhalb der Achsanordnung angeordnet werden und sind als handelsübliche Dämpfer ausgeführt. Jeder Antriebswellenabschnitt ist mit einem Rad verbunden. Ein einzelner Antriebswellenabschnitt wird hierzu durch die die Aussparung für den Antriebswellenabschnitt eines einzelnen Radträgermoduls hindurch geführt. Die Antriebswellenabschnitte können hierbei eine Rotationsbewegung auf die Räder übertragen. Beispielsweise ist die Achsanordnung hierbei eine Frontachsanordnung.

Anhand der im Folgenden erläuterten Figuren werden verschiedene Ausführungsbeispiele und Details der Erfindung näher beschrieben. Es zeigen:
- Fig.1: ein Schema eines Radträgermoduls mit einer erste Verbindungsstelle für ein Lenksystem nach einem Ausführungsbeispiel, und
- Fig. 2: ein Schema einer Achsanordnung mit dem Radträgermodul aus Fig. 1 nach einem Ausführungsbeispiel.

Die in den Figuren gezeigten Anordnungen sind in einer Konstruktionslage dargestellt.

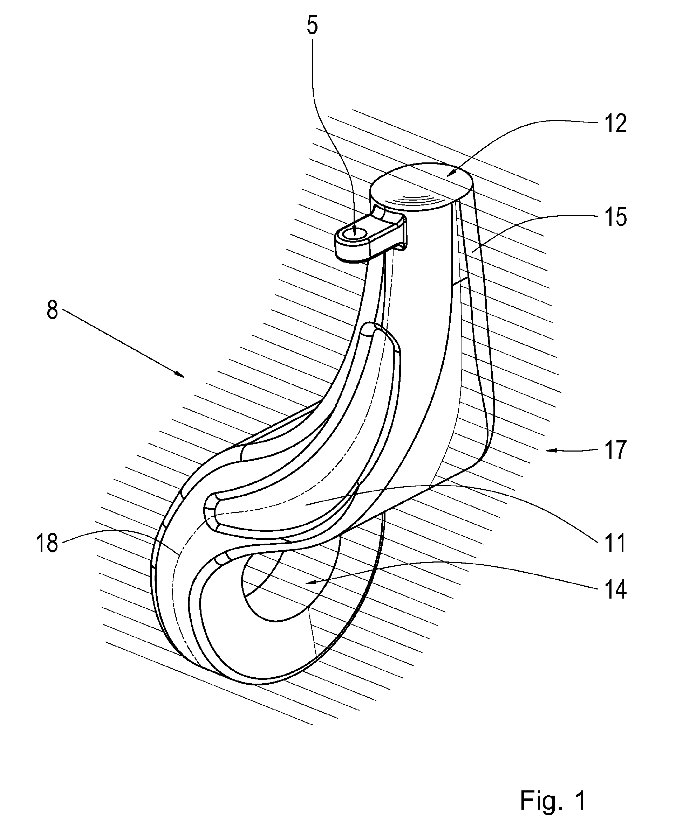

Fig. 1 zeigt ein Schema eines Radträgermoduls 8 mit einer ersten Verbindungsstelle 5 für ein Lenksystem nach einem Ausführungsbeispiel. Das Radträgermodul 8 ist aus einem Endlosfaser-Kunststoff, beispielsweise GFK, ausgeformt. Das Radträgermodul 8 ist flächensymmetrisch zu einer längsgerichteten Symmetrieebene 17 des Radträgermoduls 8. Längsgerichtet bezieht sich hierbei auf die Längserstreckung des Radträgermoduls 8. Das Radträgermodul 8 hat im Querschnitt entlang dieser Symmetrieebene 17 eine nahezu tangensförmige Mittellinie 18. Der Querschnitt wird somit entlang der Symmetrieebene 17 ausgeführt. Die Mittellinie 18 ist hierbei diejenige Linie, die sich für die Querschnittsfläche des Radträgermoduls 8 ergibt, wenn eine Linie, die zu jedem Punkt auf einer Berandung der Querschnittsfläche den gleichen Abstand aufweist, gezogen wird.

Das Radträgermodul 8 weist ein Federbein 15 auf, welches denjenigen Bereich darstellt, der das Radträgermodul 8 in Richtung einer Fahrzeugkarosserie an einem Ende begrenzt. Das Federbein 15 ist zylinderförmig ausgeformt. Das Federbein 15 weist einen Lagerbereich 12 auf, welcher eine drehbare Verbindung des Radträgermoduls 8 und somit der Achsanordnung 1 mit der Karosserie des Fahrzeugs ermöglicht. Nahe des Lagerbereichs 12 ist eine erste Verbindungsstelle 5 angeordnet. Diese erste Verbindungsstelle 5 ist zudem an einer Seitenfläche 19 des Radträgermoduls 8 angeordnet. Eine Seitenfläche 19 ist diejenige Fläche, die, wenn das Radträgermodul 8 in einer Achsanordnung verbaut ist, parallel zu einer Drehachse der Räder ist und die quer zu einer Ebene ist, die sich durch die kreisförmige Grundfläche eines Rades aufspannt. Die Seitenflächen 19 des Radträgermoduls 8 sind, wenn das Radträgermodul 8 im Fahrzeug verbaut ist, in Richtung der Fahrzeugfront und des Fahrzeughecks orientiert.

Das Radträgermodul 8 weist an seiner dem Federbein gegenüberliegenden Seite eine Aussparung 14 für einen Antriebswellenabschnitt auf. Diese Aussparung 14 ist durchgängig und kreisförmig ausgestaltet. Der Mittelpunkt dieser Aussparung 14 liegt auf der Drehachse der Räder des Fahrzeugs. Daher ist die Aussparung 14 für den Antriebswellenabschnitt um die Radmitte herum angeordnet. Das Radträgermodul 8 weist eine im Querschnitt entlang der Symmetrieebene 17 nierenförmige Aussparung auf, die vollständig mit einem dämpfenden Material 11 gefüllt ist. Diese Aussparung erstreckt sich von der einen Seitenfläche 19 zu der anderen Seitenfläche des Radträgermoduls 8.

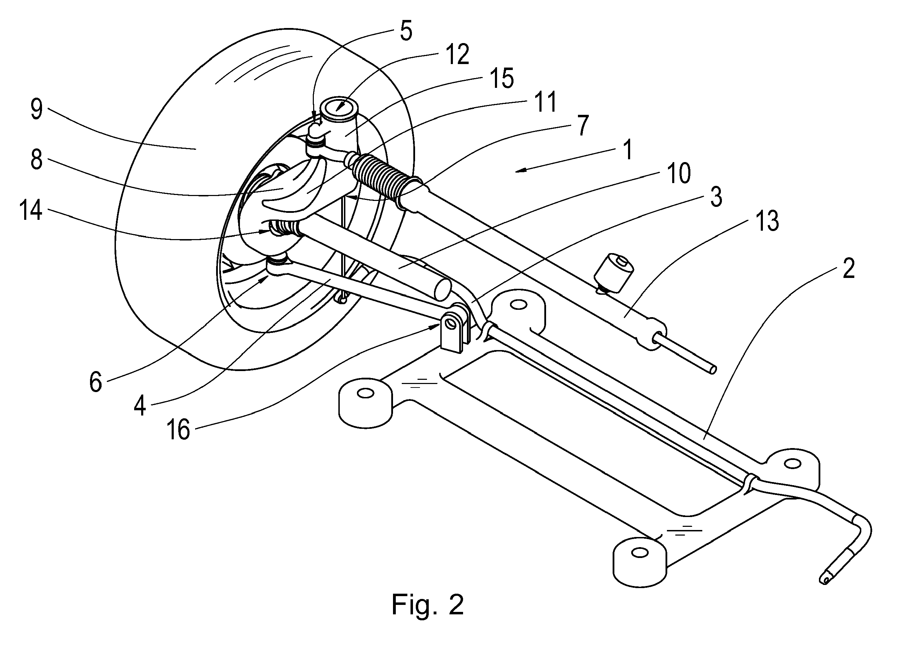

Fig. 2 zeigt ein Schema einer Achsanordnung 1 mit dem Radträgermodul 8 aus Fig. 1 nach einem Ausführungsbeispiel. Zur besseren Übersicht und auf Grund der Symmetrie der Achsanordnung 1 sind nur ein Rad 9, ein Lenker 4, ein Abschnitt des Lenksystems 13, ein Antriebswellenabschnitt 10, ein Rahmen 2 und ein Radträgermodul 8 der Achsanordnung 1 dargestellt. Das in Fig. 1 beschriebene Radträgermodul 8 weist nahe dem Federbein 15 die erste Verbindungsstelle 5 auf, mit der ein Lenksystem 13, das hier in einem Abschnitt dargestellt ist, verbunden ist. Das Lenksystem 13 ist handelsüblich ausgeführt und oberhalb der Radmitte angeordnet.

Das Radträgermodul 8 weist eine zweite Verbindungsstelle 6 unterhalb der Radmitte auf. An dieser zweiten Verbindungsstelle 6 ist das Radträgermodul 8 mit dem Lenker 4 verbunden. Der Lenker 4 ist an seinem der zweiten Verbindungsstelle 6 entgegengesetzten Ende über eine Rahmenverbindungsstelle 16 an dem Rahmen 2 gelagert. Somit kann der Lenker 4 die Radführung versteifen. Ebenfalls mit dem Rahmen 2 verbunden ist der Stabilisator 3 für eine Wankstabilisierung der Achsanordnung 1. Der Stabilisator 3 ist über eine dritte Verbindungsstelle 7 mit dem Radträgermodul 8 verbunden. Das Lenksystem 13, der Lenker 4 und der Stabilisator 3 sind jeweils handelsüblich ausgeführt.

Mit dem Radträgermodul 8 ist ein Rad 9 lösbar und beweglich verbunden. Das Rad 9 wird durch eine Antriebswelle des Fahrzeugs angetrieben, wobei hier nur ein Antriebswellenabschnitt 10 dargestellt ist. Dieser Antriebswellenabschnitt 10 ist durch die Aussparung 14 für den Antriebswellenabschnitt 10 des Radträgermoduls 8 hindurch geführt. Eine Rotationsbewegung der Antriebswelle kann somit auf das Rad 9 übertragen werden. Der Antriebswellenabschnitt 10 ist hierbei auf der Drehachse des Rades 9 positioniert.

Bei einer Fahrzeugbewegung treibt die Antriebswelle die Räder 9 an, die dadurch entstehenden Kräfte werden auf das Radträgermodul 8 übertragen, wobei der Lenker 4 die Versteifung der Radführung übernimmt. Beim Ausgleich von beispielsweise Fahrbahnunebenheiten übernimmt das Radträgermodul 8 die Federung und zusätzlich die Dämpfung mittels der mit dämpfendem Material 11 gefüllten Aussparung. Hohe Biegemomente werden durch den dafür ausreichend dimensionierten Lagerbereich 12 des Federbeins 15 des Radträgermoduls 8 abgestützt.

Die hier dargestellten Ausführungsbeispiele sind nur beispielhaft gewählt. Beispielsweise kann das Lenksystem an einer anders angeordneten ersten Verbindungstelle mit dem Radträgermodul verbunden werden. Auch die zweite Verbindungsstelle und die dritte Verbindungsstelle können an anderen Punkten auf der Oberfläche des Radträgermoduls angebracht sein. Des Weiteren kann das Radträgermodul ohne dämpfendes Material innerhalb der füllbaren Aussparung ausgeformt sein. In diesem Fall sind in der Achsanordnung zwei Dämpfer nötig. Diese können an beliebiger geeigneter Stelle innerhalb der Achsanordnung angeordnet werden. Weiterhin kann die füllbare Aussparung des Radträgermoduls eine andere Form aufweisen als in Fig. 1 gezeigt. Diese Form richtet sich nach den Anforderungen an die Federung und Dämpfung der Achsanordnung. Ebenfalls kann die Aussparung für den Antriebswellenabschnitt eine andere Form aufweisen als die in Fig. 1 gezeigte. Auch die nahezu tangensförmige Biegung des Radträgermoduls kann stärker oder weniger stark ausgebildet sein, wobei sich die Ausgestaltung nach den Anforderungen an die Stabilität und die Federung des Radträgermoduls richtet.

### Bezugszeichen

- 1: Achsanordnung
- 2: Rahmen
- 3: Stabilisator
- 4: Lenker
- 5: erste Verbindungsstelle
- 6: zweite Verbindungsstelle
- 7: dritte Verbindungsstelle
- 8: Radträgermodul
- 9: Rad
- 10: Antriebswellenabschnitt
- 11: dämpfendes Material
- 12: Lagerbereich
- 13: Lenksystem
- 14: Aussparung für den Antriebswellenabschnitt
- 15: Federbein
- 16: Rahmenverbindungsstelle
- 17: Symmetrieebene
- 18: Mittellinie
- 19: Seitenfläche

## Patentansprüche

1. Radträgermodul (8) für eine Achsanordnung (1) eines Fahrzeugs, das als ein einstückiges Bauelement aus Endlosfaser-Kunststoff ausgeformt ist, **dadurch gekennzeichnet, dass** das Radträgermodul (8) eine füllbare Aussparung aufweist, deren Mantelfläche von dem Radträgermodul (8) umschlossen ist, wobei das Radträgermodul (8) flächensymmetrisch zu einer längsgerichteten Symmetrieebene (17) ist und in einem Querschnitt entlang dieser Symmetrieebene (17) eine nahezu tangensförmige Mittellinie (18) aufweist.

2. Radträgermodul (8) nach Anspruch 1, **dadurch gekennzeichnet, dass** die füllbare Aussparung mit einem dämpfenden Material (11) gefüllt ist.

3. Radträgermodul (8) nach einem der vorherigen Ansprüche, **dadurch gekennzeichnet, dass** das Radträgermodul (8) ein Federbein (15) aufweist, welches einen für hohe Biegemomente ausgelegten Lagerbereich (12) aufweist.

4. Radträgermodul (8) nach einem der vorherigen Ansprüche, **dadurch gekennzeichnet, dass** das Radträgermodul (8) eine erste Verbindungsstelle (5) für ein Lenksystem (13) einer Achsanordnung (1) aufweist.

5. Radträgermodul (8) nach einem der vorherigen Ansprüche, **dadurch gekennzeichnet, dass** das Radträgermodul (8) eine zweite Verbindungsstelle (6) für einen Lenker (4) einer Achsanordnung (1) aufweist.

6. Radträgermodul (8) nach einem der vorherigen Ansprüche, **dadurch gekennzeichnet, dass** das Radträgermodul (8) eine Aussparung (14) an einem mit einem Rad (9) des Fahrzeugs verbindbaren Radträgermodulabschnitt aufweist, durch welche ein Antriebswellenabschnitt (10) der Achsanordnung (1) hindurch führbar ist.

7. Radträgermodul (8) nach einem der vorherigen Ansprüche, **dadurch gekennzeichnet, dass** das Radträgermodul (8) eine dritte Verbindungsstelle (7) für einen Stabilisator (3) einer Achsanordnung (1) aufweist.

8. Achsanordnung (1) für ein Fahrzeug, umfassend ein Lenksystem (13), zwei Antriebswellenabschnitte (10), zwei Lenker (4), zwei Räder (9), einen Stabilisator (3) und einen Rahmen (2), **dadurch gekennzeichnet, dass** die Achsanordnung (1) zwei Radträgermodule (8) nach einem der Ansprüche 1 bis 7 aufweist, wobei jedes Radträgermodul (8) mit dem Lenksystem (13) über die erste Verbindungsstelle(5), mit dem Lenker (4) über die zweite Verbindungsstelle (6) und mit dem Stabilisator (3) über die dritte Verbindungsstelle (7) verbunden ist, und wobei der Rahmen (2) mit dem Stabilisator (3) und mit den Lenkern (4) verbunden ist.

9. Achsanordnung (1) für ein Fahrzeug, umfassend ein Lenksystem (13), zwei Antriebswellenabschnitte (10), zwei Lenker (4), zwei Räder (9) und einen Stabilisator (3), **dadurch gekennzeichnet, dass** die Achsanordnung (1) zwei Radträgermodule (8) nach einem der Ansprüche 1 bis 7 aufweist, wobei jedes Radträgermodul (8) mit dem Lenksystem (13) über die erste Verbindungsstelle (5), mit dem Lenker (4) über die zweite Verbindungsstelle (6) und mit dem Stabilisator (3) über die dritte Verbindungsstelle (7) verbunden ist, und wobei die Lenker (4) mit der Karosserie des Fahrzeugs verbindbar sind.
